# EUROPEAN PATENT SPECIFICATION

(11) **EP 0 915 270 B1**
(45) Date of publication and mention of the grant of the patent: **04.02.2004**
(21) Application number: 98309075.4
(22) Date of filing: 05.11.1998
(51) Int. Cl.: F16H 57/04

(54) **Integrated transmission manifold and oil filter**
Integrierter Flüssigkeitsverteiler und Ölfilter für Getriebe
Collecteur de fluide avec filtre à huile intégré pour transmission

(30) Priority: 06.11.1997 US 965363
(43) Date of publication of application: 12.05.1999
(73) Proprietor: Ford Global Technologies, LLC, Dearborn, MI 48126 (US)
(72) Inventor: Miller, Robert J., Livonia, Michigan 48154 (US)
(74) Representative: Messulam, Alec Moses

(56) References cited:
- US-A- 3 906 994
- US-A- 4 446 017
- US-A- 4 450 081
- US-A- 4 889 621

## Description

The present invention relates to a fluid manifold assembly in a transmission in a motor vehicle.

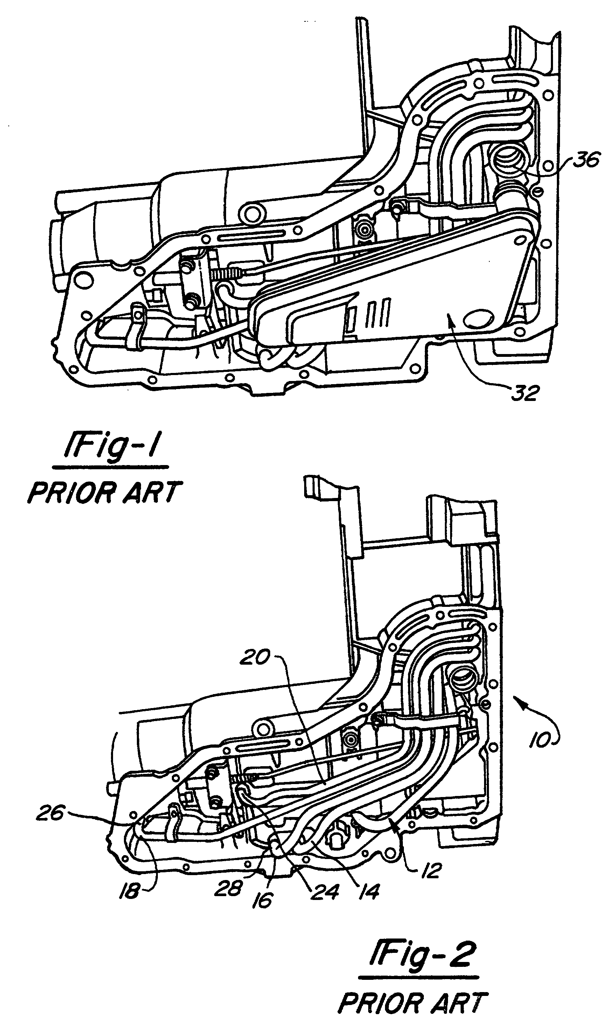

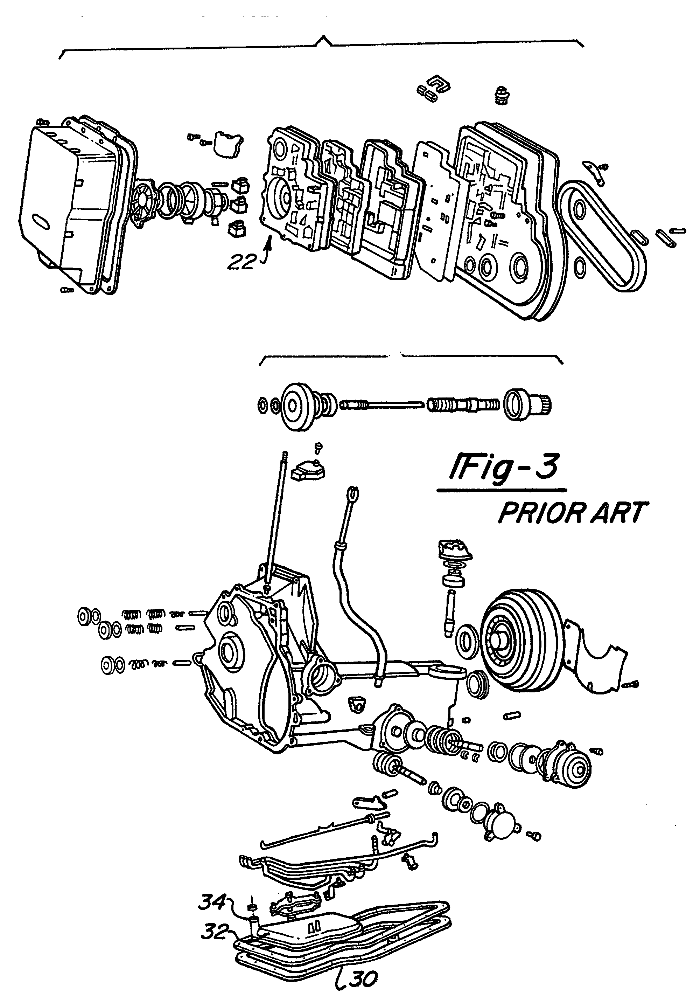

In an automatic transmission of the prior art, as illustrated in Figures 1-3, a plurality of discrete tubes are provided to transport transmission fluid from the transmission fluid pump to various locations in the transmission for lubrication and to apply various clutches. Prior art designs include a plurality of discretely formed tubes to connect a port pressurised by the pump to a second port on the transmission for lubrication or to pressurise a clutch. Each of these tubes is routed individually and secured in place with one or more- brackets. Additionally, a separate filter is provided in the prior art transmission to filter the fluid between a reservoir and the pump. Such tubes and filters are well known to one skilled in the art.

Current vehicle designs require more efficient use of space and reductions in component cost, complexity and weight. The prior art plurality of tubes and separate filter require a large amount of package space, several unique tubes, assembly labour and retention brackets.

It would therefore be desirable to provide a more efficient packaging of the fluid tubes and filter.

Accordingly, a motor vehicle transmission and fluid manifold assembly is provided, comprising a fluid manifold housing having a plurality of discrete fluid passages integrally formed therein for communicating fluid therethrough. A filter medium is provided in one of said passages for filtering the fluid. A reservoir supplies fluid to a pump forming part of the transmission. The pump has an inlet port and a plurality of outlet ports for pressuring a plurality of distal pressure ports in the transmission. The manifold housing is located in the reservoir. The said one of the passages provides fluid communication between the reservoir and the pump inlet port and a second of the passages provides fluid communication between one of the pump outlet ports and one of the distal transmission pressure ports.

Improvements of the present invention include integration of the transmission fluid tubes. This integration provides an improvement in packaging efficiency, reduction in number of parts and cost reduction of the assembly. The integration further reduces complexity and labour to install components, and a reduction of weight.

The invention will now be described, by way of example, with reference to the accompanying drawings, in which:
Figure 1 is an illustration of a portion of a prior art automatic transmission of a motor vehicle with the oil pan removed;
Figure 2 is an illustration of the prior art transmission of Figure 1 with the fluid filter assembly removed;
Figure 3 is an exploded view of a prior art transmission;
Figure 4 is an isometric representation of an integrated fluid manifold and filter according to the present invention; and

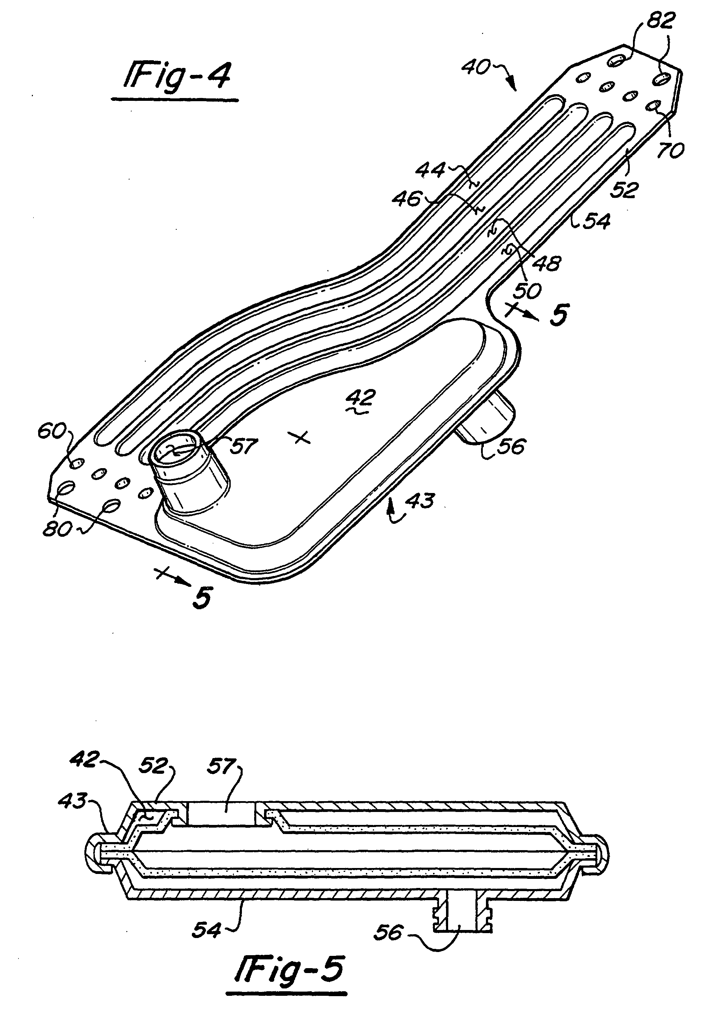

Figure 5 is a partial cross-sectional view through the filter portion of the integrated manifold of Figure 4.

In a prior art transmission 10 as illustrated in Figures 1-3, a plurality of oil transfer tubes 12, 14, 16, 18, 20 connect a pump 22 with several portions of the transmission 10 to activate hydraulic clutches (not shown) and to provide lubrication as known to one skilled in the art. The tubes 12, 14, 16, 18, 20 transport the fluid from the pump 22, typically at the front of the transmission 10, to distal locations, e.g. shown at 24, 26 and 28, typically at the rear of the transmission (in a transaxle as illustrated here, the "front" of the transmission refers to the torque input end).

A reservoir 30 is provided at the bottom of the transmission to collect transmission fluid. A filter 32 is provided within the reservoir 30. Fluid enters a port of the reservoir (not shown in Figs 1-3), passes through a filter medium (not shown in Figs 1-3), and exits an outlet port 34 of the filter 32. The fluid then is draw into an inlet port 36 for the pump 22. The pump 22 pressurises the fluid and sends the fluid through a manifold to the oil transfer tubes 12, 14, 16, 18, 20, which then distribute the oil to the various portions of the transmission.

As shown in Figure 4, a manifold 40 according to the present invention comprises a filter portion 42 and a plurality of oil passages 44, 46, 48, 50. The manifold 40 in a preferred embodiment is formed from two complimentary sheet metal stampings 52, 54. A first of the stampings 54 comprises the lower portion of the manifold, and includes a fluid inlet port 56. The first stamping is preferably generally planar. The second of the stampings 52 comprises the upper portion of the manifold. As shown in the Figure 4, the second portion 52 concludes a depressed portion in which a filter is provided. The second stamping 52 also includes an outlet port 57 from which the oil is directed toward the pump as is known to one skilled in the art.

The second portion 52 further comprises a plurality of longitudinal beads 44, 46, 48, 50, which traverse from a first end of the manifold to a second end of the manifold. A plurality of apertures 60 are provided in the second portion 52 to communicate fluid from the outlet of the pump to the beads 44, 46, 48, 50, to distal locations on the transmission in a manner similar to the prior art oil transfer tubes. A plurality of outlet apertures 70 are provided at the second end to communicate with the clutches and lubrication ports.

As discussed above, the first half 54 of the manifold 40 is generally planar. In an alternative embodiment, each of the manifolds halves 52, 54 have complementary beads 44, 46, 48, 50, such that when the two halves 52, 54 are mated at assembly, each of the beads comprises one half of a fluid conduit.

Although not illustrated here, one skilled in the art readily recognises that in a preferred embodiment, a flat surface is provided on the transmission itself where the transmission has a plurality of fluid outlet ports to mate with the apertures 60 in the plate 52, thereby facilitating fluid communication between the pump and manifold 40. One skilled in the art recognises that a seal or gasket may be provided around each aperture 60, 70, to seal the manifold to the transmission.

In a preferred embodiment, a pair of apertures 80, 82 are provided at either end of the manifold to facilitate securing of the manifold to the transmission with a pair of bolts. Two apertures are provided at each end of the manifold adjacent the fluid communication apertures for the conduits. The manifold is aligned to the transmission such that the outlet port 57 of the filter 40 is mated to the inlet port 36 for the pump and sealingly engaged therewith. The four attachment apertures 80, 82 are aligned to threaded holes (not shown) in the transmission and four bolts (not shown) are installed through the attachment apertures 80, 82 to secure the manifold 40 to the transmission. When the bolts are secured, the manifold 40 is brought into sealing engagement with the transmission. Prior to securing the manifold, the pump outlet ports are aligned with the inlet apertures 60 of the manifold and the outlet ports 70 of the manifold are aligned with the various clutches and lubrication ports of the transmission.

Although not shown here, in an alternative embodiment, a plurality of tubes are either welded to the apertures 60, 70 to facilitate communication to the transmission, or a plurality of loose tubes may be provided to facilitate such communication. One skilled in the art further recognises that proper gasket should be provided in such situations.

Although not illustrated here, a gasket is provided between the two stampings 52, 54 to prevent fluid communication between the depression for the filter 43 and the adjacent conduit bead 50, and between the individual conduit beads 44, 46, 48, 50. Alternatively, the stampings 53, 54 could have a weld seam (not shown) between the individual beads 44, 46,, 48, 50 and between the depression 43 and adjacent bead 50, to prevent fluid communication therebetween.

In an alternative embodiment, the manifold is constructed of two halves made from various alternative materials as is appreciated by one skilled in the art. An example of such an alternative comprises a bonded fibre reinforced resin. The resin is injected moulded into a shape similar the shape illustrated in Figure 4. Or the halves could be vacuum formed to the appropriate shape. Alternatively, one half is stamped and the second half is moulded. The individual passages may be separated with a gasket, seal, vibration weld, or any other manner known to one skilled in the art.

A preferred embodiment as illustrated in Figure 4 shows the inlet port 56 at the bottom of the manifold for the filter 42. Such construction is provided because in the present invention, elimination of discrete tubes allows the manifold assembly to be positioned in closer proximity to the transmission. Therefore an inlet port at the bottom of the filter is most convenient.

In an alternative embodiment the present invention is further modularised to accommodate wiring connections. For example, one of the fluid conduits (e.g. 44) has a wire routed therethrough. A first end of the wire (not shown) projects from a first aperture 60 for connection in the transmission. A second end of the wire (not shown) projects from a second aperture 70 for connection at the second end of the manifold. Thus an electrical connection may be made from the front of the transmission to the rear of the transmission, minimising package space and potential damage to any such wires.

## Claims

1. A motor vehicle transmission and fluid manifold assembly, comprising:
a fluid manifold housing (52,54) having a plurality of discrete fluid passages (44,46,48,50) integrally formed therein for communicating fluid therethrough;
a filter medium (42) provided in one of said passages for filtering said fluid;
a pump forming part of said motor vehicle transmission and a reservoir for supplying fluid to said pump, the pump having an inlet port and a plurality of outlet ports for pressuring a plurality of distal pressure ports in the transmission, the manifold housing being located in the reservoir;
the said one of the passages providing fluid communication between the reservoir and the pump inlet port and a second of said passages providing fluid communication between one of the pump outlet ports and one of the distal transmission pressure ports.

2. A fluid manifold assembly as claimed in Claim 1, wherein said housing comprises a pair of stamped sheet metal pieces, one of said pieces having a plurality of beads for forming said passages when said pieces are assembled.

3. A fluid manifold assembly as- claimed in Claim 1, wherein said housing comprises a pair of moulded composite parts, one of said moulded parts having a plurality of beads for forming said passages when said parts are assembled.

4. A fluid manifold assembly as claimed in any of the preceding claims, further comprising means for preventing fluid communication between the discrete passages.

5. A fluid manifold assembly as claimed in any of the preceding claims, further comprising a discrete wiring passage.

## Patentansprüche

1. Kraftfahrzeuggetriebe- und Fluidverteilerbaugruppe, umfassend:
ein Fluidverteilergehäuse (52, 54) mit mehreren gesonderten Fluiddurchläufen (44, 46, 48, 50), die darin einstückig zum Übertragen von Fluid dort hindurch ausgebildet sind;
ein Filtermedium (42), das in einem der Durchläufe zum Filtern des Fluids vorgesehen ist;
eine Pumpe, die ein Bestandteil des Kraftfahrzeuggetriebes bildet, und einen Sammelbehälter zum Leiten des Fluids an die Pumpe, wobei die Pumpe eine Einlaßöffnung und mehrere Auslaßöffnungen zum unter Druck setzen mehrerer distaler Drucköffnungen im Getriebe aufweist, wobei das Verteilergehäuse in dem Sammelbehälter angeordnet ist;
wobei der besagte eine der Durchläufe für eine Fluidübertragung zwischen dem Sammelbehälter und der Pumpeneinlaßöffnung sorgt und ein zweiter der Durchläufe für eine Fluidübertragung zwischen einer der Pumpenauslaßöffnungen und einer der distalen Getriebedrucköffnungen sorgt.

2. Fluidverteilerbaugruppe nach Anspruch 1, wobei das Gehäuse ein Paar gestanzter Blechstücke umfaßt, von denen eines mehrere Wülste zum Ausbilden der Durchläufe aufweist, wenn die Stücke zusammengefügt sind.

3. Fluidverteilerbaugruppe nach Anspruch 1, wobei das Gehäuse ein Paar geformter Verbundteile umfaßt, von denen eines mehrere Wülste zum Ausbilden der Durchläufe aufweist, wenn die Stücke zusammengefügt sind.

4. Fluidverteilerbaugruppe nach einem der vorhergehenden Ansprüche, ferner umfassend Mittel zum Verhindern von Fluidübertragung zwischen den gesonderten Durchläufen.

5. Fluidverteilerbaugruppe nach einem der vorhergehenden Ansprüche, ferner umfassend einen gesonderten Verdrahtungsdurchlauf.

## Revendications

1. Transmission de véhicule à moteur et ensemble de collecteur de fluide, comprenant :
un boîtier de collecteur de fluide (52, 54) comportant une pluralité de passages de fluide séparés (44, 46, 48, 50) formés de façon intégrée dans celui-ci en vue d'une communication de fluide au travers de ceux-ci,
un moyen de filtre (42) prévu dans l'un desdits passages afin de filtrer ledit fluide,
une pompe faisant partie de ladite transmission de véhicule à moteur et un réservoir destiné à fournir du fluide à ladite pompe, la pompe comportant un orifice d'entrée et une pluralité d'orifices de sortie destinée à mettre sous pression une pluralité d'orifices de pression distants dans la transmission, le boîtier de collecteur étant situé dans le réservoir,
ledit un des passages fournissant une communication de fluide entre le réservoir et l'orifice d'entrée de pompe et un second desdits passages fournissant une communication de fluide entre l'un des orifices de sortie de pompe et l'un des orifices de pression de transmission distants.

2. Ensemble de collecteur de fluide selon la revendication 1, dans lequel ledit boîtier comprend une paire de pièces métalliques de tôle emboutie, l'une desdites pièces comportant une pluralité de nervures destinées à former lesdits passages lorsque lesdites pièces sont assemblées.

3. Ensemble de collecteur de fluide selon la revendication 1, dans lequel ledit boîtier comprend une paire de pièces composites moulées, l'une desdites pièces moulées comportant une pluralité de nervures afin de former desdits passages lorsque lesdites pièces sont assemblées.

4. Ensemble de collecteur de fluide selon l'une quelconque des revendications précédentes, comprenant en outre un moyen destiné à empêcher une communication de fluide entre les passages séparés.

5. Ensemble de collecteur de fluide selon l'une quelconque des revendications précédentes, comprenant en outre un passage pour câblage séparé.
